# EUROPEAN PATENT APPLICATION

(11) **EP 1 914 059 A2**
(43) Date of publication of application: **23.04.2008**
(21) Application number: 07118634.0
(22) Date of filing: 16.10.2007
(51) Int. Cl.: B29C 45/14

(54) **Method, device and unit for positioning labels**

(30) Priority: 20.10.2006 NL 1032711
(71) Applicant: Alberts, Petrus Antonius Johannes, 7556 MZ Hengelo (NL)
(72) Inventor: Alberts, Petrus Antonius Johannes, 7556 MZ Hengelo (NL)
(74) Representative: Bakker, Hendrik

(57) **Abstract**

The invention relates to a method for placing labels in a mould (5) of an injection moulding machine using a robot (2). The labels are herein taken out of a magazine (3) beforehand and placed on a positioning unit by a positioning robot (2). The robot then takes the labels from the positioning unit and places them in the mould (5).

## Description

The invention relates to a method for placing labels from at least one magazine in a mould of an injection moulding machine using a robot.

The problem here is that increasingly higher standards are being set for the accuracy of placing of the labels. This means that increasingly higher standards are also being set for the accuracy of the position of a label in a magazine, and this makes the magazine complex and expensive. In addition, a number of products are often produced simultaneously in one operation in order to increase productivity, so that a number of these complex and expensive magazines have to be available.

The present invention obviates this drawback and has the feature that the labels are taken out of the at least one magazine and placed in at least one positioning unit by a positioning robot, after which the robot takes the labels out of the at least one positioning unit. The positioning unit is herein adapted such that labels come to lie at a precisely determined location, whereby the accuracy of the placing of the labels in the magazine is no longer an important factor. It is now also possible to provide a plurality of positioning units with a label from one magazine, and these units can then be placed in the injection moulding machine in one operation by the robot.

A favourable realization of the inventive method has the feature that the robot releases a label close to a positioning unit, after which the label is carried to a predetermined position using a mechanical guide and a force acting on the label. The force here preferably comprises the force of gravity or an electrical force, or the force is exerted by a pressing member or a gas flow.

The invention also relates to a label positioning unit, comprising at least one object having thereon a target area within which a label has to be positioned. According to an aspect of the invention, the label positioning unit has the feature that the object is provided with at least three conically tapering protrusions which, at least close to the object, precisely enclose the target area. It is then sufficient to release a label as soon as it is located within the conically tapering protrusions, after which the label is carried to the target area under the influence of the force of gravity or using an airflow or using static electricity or by a pressing member.

According to a further aspect of the invention, a favourable embodiment of the label positioning unit has the feature that the object is fixed onto an aligning unit adapted to align the position of the target area. In this way the position of the label in the mould can be optimized during setting of the injection moulding machine, so that for instance the edges of the label fit precisely. In order to enable accurate alignment of the position, the aligning unit is preferably adapted to translate in two directions and rotate the target area.

A further favourable embodiment of the label positioning unit has the feature that the aligning unit comprises a housing having therein a first translation member, a second translation member, a rotation member and an interface plate for fixing of the object. The aligning unit has hereby become a logistic unit which can be readily replaced and which can advantageously be produced in large numbers.

A further very favourable embodiment of the label positioning unit has the feature that the first translation member, the second translation member and the rotation member comprise a stack of three plates, each provided with an aligning point.

A further favourable embodiment has the feature that the rotation member also forms the interface plate.

A further favourable embodiment has the feature that the housing takes a rectangular form and that the aligning points are arranged on one side of the housing, thereby guaranteeing the accessibility of the aligning points and practically precluding mistakes during alignment. The housings can further be mounted closely against each other, whereby relatively large numbers of small labels can also be accommodated simultaneously.

A further favourable embodiment has the feature that the interface plate is provided with an opening which connects to a connector to which an air pump can be connected. A connection between the opening and the connector herein preferably comprises a hollow rotation shaft for the rotation member.

The invention also relates to a device for positioning labels, wherein the device is provided with at least one label positioning unit as specified in the foregoing paragraphs.

A favourable embodiment of the invention has the feature that the device comprises at least one magazine for labels, in addition to a positioning robot for taking labels out of the at least one magazine and subsequently placing the labels in at least one positioning unit.

The device is preferably provided with two groups of magazines, one group of which can be utilized by the positioning robot while the other group can simultaneously be provided with a new supply of labels.

A further favourable embodiment has the feature that the number of label positioning units is greater than the number of magazines. Use is made here of the fact that within one operating run of the injection moulding machine a relatively large amount of time is available for placing of the labels in the label positioning units.

The invention will now be further elucidated with reference to the following figures, wherein:
- Fig. 1: shows schematically a possible embodiment of an injection moulding machine with a known robot for placing labels;
- Fig. 2: shows schematically a possible embodiment of an injection moulding machine with a robot according to the invention for placing labels;
- Fig. 3A: shows a schematic top view of a possible embodiment of a positioning unit;
- Fig. 3B: is a schematic side view of this embodiment;
- Fig. 4A: shows in more detail a top view of a possible embodiment of an aligning unit according to the invention;
- Fig. 4B: shows in more detail a top view of an alternative embodiment of an aligning unit according to the invention;
- Fig. 5A: shows in more detail a top view of a further possible embodiment of an aligning unit according to the invention;
- Fig. 5B: shows a bottom view of this embodiment.

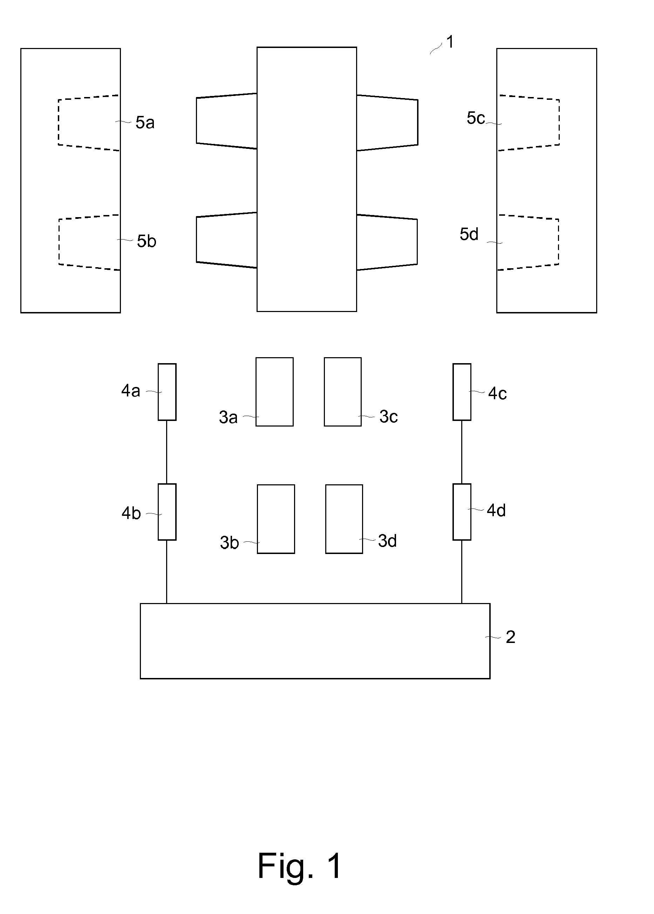

Fig. 1 shows schematically a possible embodiment of an injection moulding machine 1 with a known robot 2 for placing labels. Per operating run the injection moulding machine 1 makes four margarine tubs, the labels for which are taken by robot 2 from four magazines 3a,3b,3c,3d using four pick-up devices 4a,4b,4c,4d and then placed on the four moulds 5a,5b,5c,5d. It will be apparent that the precision with which the labels are placed on moulds 5a,5b,5c,5d depends directly on the accuracy of the position of magazines 3a,3b,3c,3d and on the accuracy of the position of the labels in magazines 3a,3b,3c,3d.

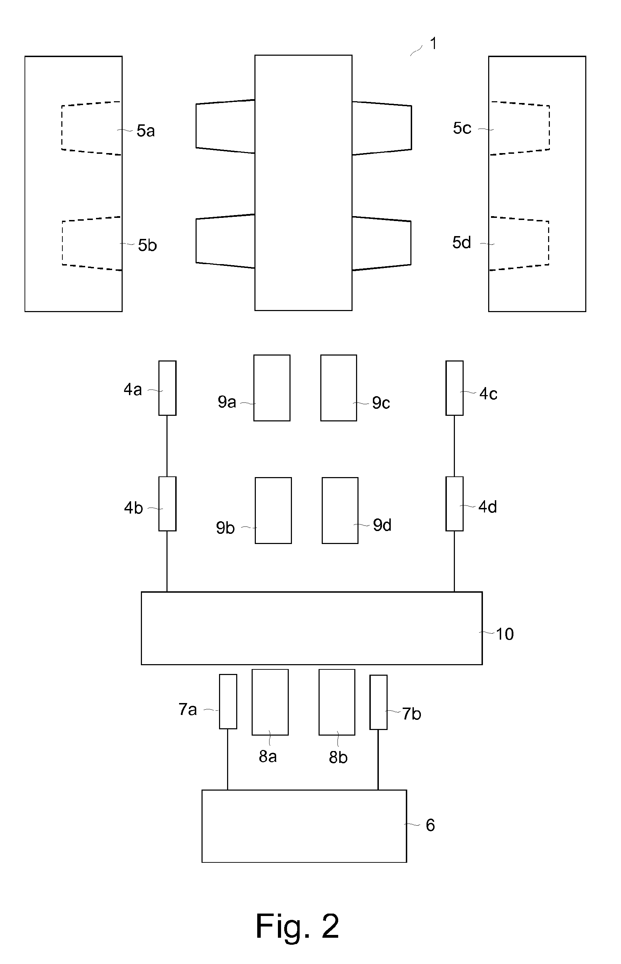

Fig. 2 shows schematically a possible embodiment of an injection moulding machine 1 with a robot assembled according to the invention for placing labels. The assembled robot consists of a positioning robot 6 with two pick-up devices 7a,7b which takes labels out of two magazines 8a,8b and places these in two stages on four positioning units 9a,9b,9c,9d, and a robot 10 which picks up the labels from positioning units 9a,9b,9c,9d using four pick-up devices 4a,4b,4c,4d and places them on the four moulds 5a,5b,5c,5d. The position of positioning units 9a,9b,9c,9d can be set precisely in simple manner, whereby the labels can be placed very accurately on moulds 5a,5b,5c,5d. It is of course also possible to use four magazines so that positioning robot 6 can provide positioning units 9a,9b,9c,9d with a label in one operation. Use can further be made of two groups of two magazines, wherein a first group is in each case utilized by positioning robot 6 while the other group can simultaneously be filled. The two groups can then be placed for instance on a rotatable platform so that interchanging of the groups can take place practically without loss of production. It is of course also possible to use only one magazine, wherein positioning robot 6 places the labels in four stages on positioning units 9a,9b,9c,9d.

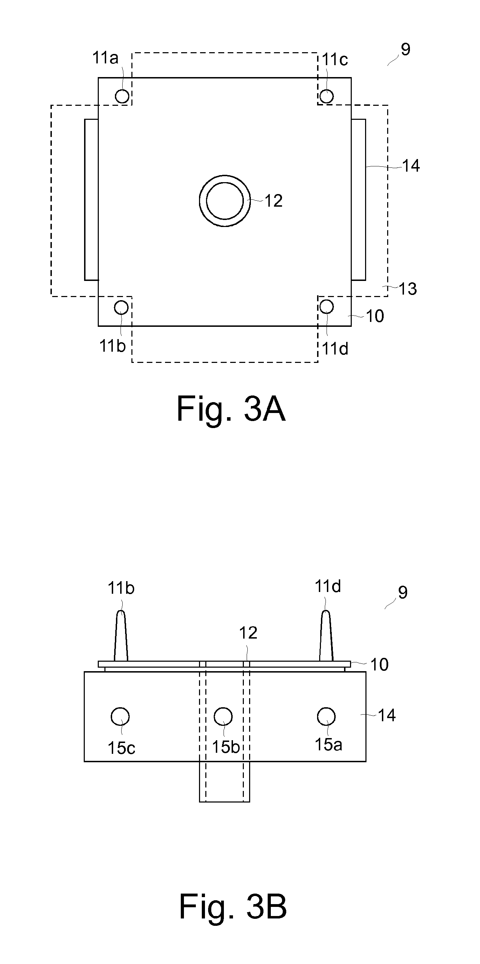

Fig. 3A shows a schematic top view of a possible embodiment of a positioning unit 9. Positioning unit 9 consists of an object 10 on which, using conically tapering protrusions 11a,11b,11c,11d, a target area is established within which a label must come to lie. Object 10 is provided centrally with a suction opening 12 with which the label 13, indicated with a broken line, is pulled onto object 10. Positioning unit 9 further consists of an aligning unit 14 to which object 10 is fixed. Using aligning unit 14 object 10 can be displaced to some extent together with protrusions 11a,11b,11c,11d such that the label is positioned very precisely. The conically tapering protrusions 11a,11b,11c,11d here ensure that, despite a possible small displacement, the label still always comes to lie on the target area.

Fig. 3B shows a schematic side view of this embodiment, with object 10 provided with conically tapering protrusions 11a,11b,11c,11d and suction opening 12, in addition to aligning unit 14 provided with aligning points 15a,15b,15c with which object 10 can be translated and rotated.

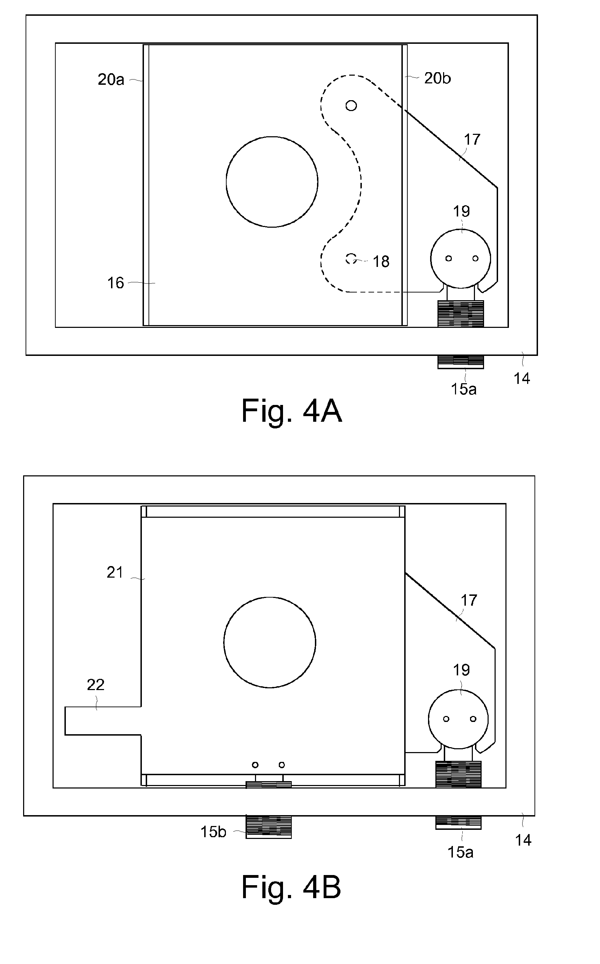

Fig. 4A shows in more detail a top view of a possible embodiment of an aligning unit 14 according to the invention. Arranged in aligning unit 14 is a plate 16 which can be displaced from left to right in the figure using a lever 17 with rotation point 18 and aligning point 15a, which consists of a screw with an outer end which is dowelled rotatably in a cylinder 19 which can rotate in lever 17. An object 10 can now be fixed on plate 16 and then translated in one direction. Plate 16 is however preferably provided with two upright edges 20a,20b over which a second plate can be displaced downward from the top.

Fig. 4B shows in more detail a top view of an embodiment of an aligning unit according to the invention, wherein a plate 21 can be displaced downward from the top using aligning point 15b, which consists of a screw with an outer end which is dowelled rotatably in plate 21. An object 10 can now be fixed to plate 21 and can then be translated in two directions. Plate 21 is however preferably provided with a protrusion 22 to which can be fixed an aligning point 15c with which a third plate can be rotated.

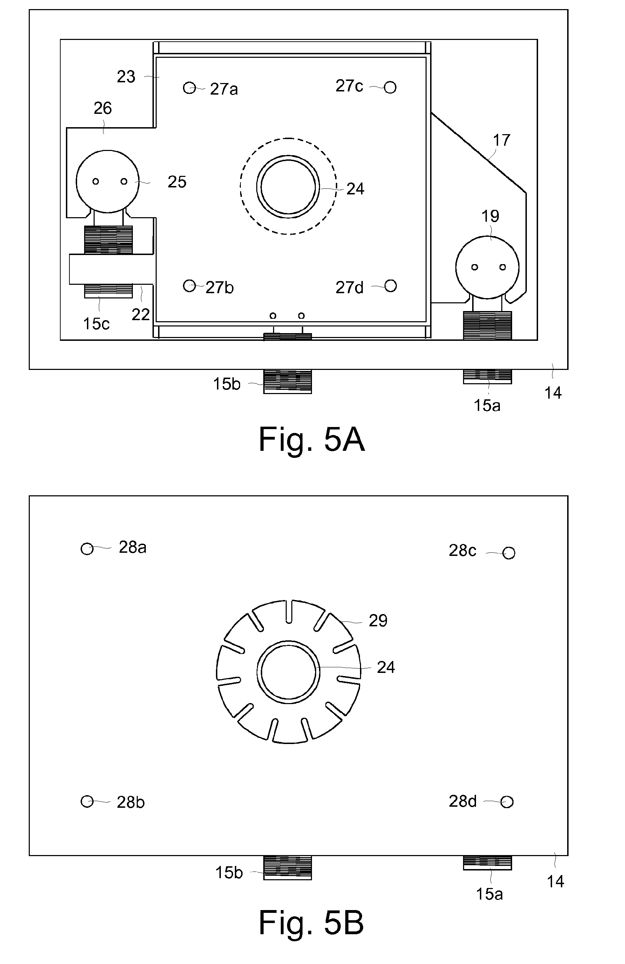

Fig. 5A shows in more detail a top view of an embodiment of an aligning point according to the invention, wherein a plate 23 can be rotated around a tube 24 using aligning point 15c which consists of a screw with an outer end which is dowelled rotatably in a cylinder 25 which can rotate in a protrusion 26 of plate 23. An object 10 can now be fixed to plate 23 and can then be translated in two directions and can be rotated. Plate 23 is provided with fastening holes 27a,27b,27c,27d for fixing an object. An air pump can be connected to tube 24 so that an underpressure is created which suctions a label onto an object mounted on aligning unit 14.

Fig. 5B shows a bottom view of this embodiment of aligning unit 14, with four fastening holes 28a,28b,28c,28d and a spring ring 29 with which tube 24 and thereby plates 16,21 and 23 are held in place.

## Claims

1. Method for placing labels from at least one magazine in a mould of an injection moulding machine using a robot, **characterized in that** the labels are taken out of the at least one magazine and placed in at least one positioning unit by a positioning robot, after which the robot takes the labels out of the at least one positioning unit.

2. Method as claimed in claim 1, **characterized in that** the robot releases a label close to a positioning unit, after which the label is carried to a predetermined position using a mechanical guide and a force acting on the label.

3. Method as claimed in claim 2, **characterized in that** the force is the force of gravity or an electrical force, or that the force is exerted by a pressing member or a gas flow.

4. Label positioning unit, comprising at least one object having thereon a target area within which a label has to be positioned, **characterized in that** the object is provided with at least three conically tapering protrusions which enclose the target area on the surface.

5. Label positioning unit as claimed in claim 4, **characterized in that** the object is fixed onto an aligning unit adapted to align the position of the target area.

6. Label positioning unit as claimed in claim 5, **characterized in that** the aligning unit is adapted to translate in two directions and rotate the target area.

7. Label positioning unit as claimed in claim 6, **characterized in that** the aligning unit comprises a housing having therein a first translation member, a second translation member, a rotation member and an interface plate for fixing of the object.

8. Label positioning unit as claimed in claim 7, **characterized in that** the first translation member, the second translation member and the rotation member comprise a stack of three plates, each provided with an aligning point.

9. Label positioning unit as claimed in claim 8, **characterized in that** the rotation member also forms the interface plate.

10. Label positioning unit as claimed in claim 8 or 9, **characterized in that** the housing takes a rectangular form and that the aligning points are arranged on one side of the housing.

11. Label positioning unit as claimed in any of the claims 7-10, **characterized in that** the interface plate is provided with an opening which connects to a connector to which an air pump can be connected.

12. Label positioning unit as claimed in claim 11, **characterized in that** a connection between the opening and the connector comprises a hollow rotation shaft for the rotation member.

13. Device for positioning labels, **characterized in that** the device is provided with at least one label positioning unit as claimed in any of the claims 4-12.

14. Device as claimed in claim 13, **characterized in that** the device comprises at least one magazine for labels, in addition to a positioning robot for taking labels out of the at least one magazine and subsequently placing the labels in at least one positioning unit.

15. Device as claimed in claim **14, characterized in that** the device is provided with two groups of magazines, one group of which can be utilized by the positioning robot.

16. Device as claimed in claim 14 or 15, **characterized in that** the number of label positioning units is greater than the number of magazines.
